# EUROPEAN PATENT APPLICATION

(11) **EP 4 346 314 A1**
(43) Date of publication of application: **03.04.2024**
(21) Application number: 22198958.5
(22) Date of filing: 30.09.2022
(51) Int. Cl.: H04W 74/00, H04L 1/08, H04W 48/10, H04W 74/08

(54) **APPARATUS, METHOD AND COMPUTER PROGRAM**

(71) Applicant: Nokia Technologies Oy, 02610 Espoo (FI)
(72) Inventor: MARCONE, Alessio, 81541 Munich (DE); NHAN, Nhat-Quang, 51100 Reims (FR); MASO, Marco, 92130 Issy les Moulineaux (FR); ROM, Christian, 9000 Aalborg (DK); KARIMIDEHKORDI, Ali, 81545 Munich (DE)
(74) Representative: Nokia EPO representatives

(57) **Abstract**

There is provided an apparatus comprising means for, at a user equipment, receiving, from a network node, configuration parameters defining resources associated with a plurality of signals for transmission of a first message of a random access procedure, obtaining signal measurements for the plurality of signals, determining a number of transmissions of the first message for a first signal and a second signal from the plurality of signals based on the obtained signal measurements, choosing resources associated with one of the first signal and the second signal for transmission of the first message, based at least on the determined number of transmissions of the first message for the respective signals and the obtained signal measurements and performing transmission of the first message of the random access procedure on at least part of the chosen resources.

## Description

### Field

The present application relates to a method, apparatus, system and computer program and in particular but not exclusively to uplink centric synchronization signal block selection.

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices may operate in accordance with a given standard or specification which sets out what the various entities associated with the system are permitted to do and how that should be achieved. Communication protocols and/or parameters which shall be used for the connection are also defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### Summary

In a first aspect there is provided an apparatus comprising means for an apparatus comprising means for, at a user equipment, receiving, from a network node, configuration parameters defining resources associated with a plurality of signals for transmission of a first message of a random access procedure, obtaining signal measurements for the plurality of signals, determining a number of transmissions of the first message for a first signal and a second signal based on the obtained signal measurements, choosing resources associated with one of the first signal and the second signal for transmission of the first message, based at least on the determined number of transmissions of the first message for the respective signals and the obtained signal measurements and performing transmission of the first message of the random access procedure on at least part of the chosen resources.

Means for choosing resources associated with one of the first signal and the second signal may comprise means for determining estimated repetition gains from the number of transmissions of the first message determined for the first signal and for the second signal.

The apparatus may comprise means for determining the estimated repetition gain based on channel conditions of the respective signal.

The channel conditions may include a channel quality metric based on strength of line of sight component.

Means for choosing resources associated with one of the first signal and the second signal may further comprise means for determining power values for the first signal and the second signal from the obtained signal measurements of the first signal and the second signal.

Means for choosing resources associated with one of the first signal and the second signal may further comprise means for comparing a sum of the determined power values and the estimated repetitions gains for the first signal and the second signal, and choosing the signal with the largest sum.

The first signal may be associated with a first beam of the user equipment. The second signal may be associated with one of the first beam and a second beam of the user equipment.

Means for choosing resources associated with one of the first signal and the second signal may further comprise means for determining an estimated degradation of decoding performance for a downlink channel when received with the beam associated with the signal having the lower determined power value and means for determining the one of the first signal and the second signal based on the estimated degradation.

The signal measurement may be synchronization signal or reference signal received power.

The plurality of signals may be from the same or different cells.

The signals may comprise either synchronisation signal blocks or channel state information reference signals.

The apparatus may comprise means for receiving further configuration parameters defining a mapping between the number of transmissions of the first message of the random access procedure on resources associated with the plurality of signals and signal measurements of the plurality of signals and determining the number of transmissions of the first message for the first signal and the second signal based on the configured mapping.

In a second aspect there is provided a method comprising, at a user equipment, receiving, from a network node, configuration parameters defining resources associated with a plurality of signals for transmission of a first message of a random access procedure, obtaining signal measurements for the plurality of signals, determining a number of transmissions of the first message for a first signal and a second signal from the plurality of reference signals based on the obtained signal measurements, choosing resources associated with one of the first signal and the second signal for transmission of the first message, based at least on the determined number of transmissions of the first message for the respective signals and the obtained signal measurements and performing transmission of the first message of the random access procedure on at least part of the chosen resources.

Choosing resources associated with one of the first signal and the second signal may comprise determining estimated repetition gains from the number of transmissions of the first message determined for the first signal and for the second signal.

The method may comprise determining the estimated repetition gain based on channel conditions of the respective signal.

The channel conditions may include a channel quality metric based on strength of line of sight component.

Choosing resources associated with one of the first signal and the second signal may further comprise determining power values for the first signal and the second signal from the obtained signal measurements of the first signal and the second signal.

Choosing resources associated with one of the first signal and the second signal may further comprise comparing a sum of the determined power values and the estimated repetitions gains for the first signal and the second signal, and choosing the signal with the largest sum.

The first signal may be associated with a first beam of the user equipment. The second signal may be associated with one of the first beam and a second beam of the user equipment.

Choosing resources associated with one of the first signal and the second signal may further comprise determining an estimated degradation of decoding performance for a downlink channel when received with the beam associated with the signal having the lower determined power value and determining the one of the first signal and the second signal based on the estimated degradation.

The signal measurement may be synchronization signal or reference signal received power.

The plurality of signals may be from the same or different cells.

The signals may comprise either synchronisation signal blocks or channel state information reference signals.

The method may comprise receiving further configuration parameters defining a mapping between the number of transmissions of the first message of the random access procedure on resources associated with the plurality of signals and signal measurements of the plurality of signals and determining the number of transmissions of the first message for the first signal and the second signal based on the configured mapping.

In a third aspect there is provided an apparatus comprising: at least one processor and at least one memory storing instructions that, when executed by the at least one processor, cause the apparatus at least to, at a user equipment, receive, from a network node, configuration parameters defining resources associated with a plurality of signals for transmission of a first message of a random access procedure, obtain signal measurements for the plurality of signals, determine a number of transmissions of the first message for a first signal and a second signal from the plurality of signals based on the obtained signal measurements, choose resources associated with one of the first signal and the second signal for transmission of the first message, based at least on the determined number of transmissions of the first message for the respective signals and the obtained signal measurements and perform transmission of the first message of the random access procedure at least part of the on the chosen resources.

The apparatus maybe caused to determine estimated repetition gains from the number of transmissions of the first message determined for the first signal and for the second signal.

The apparatus may be caused to determine the estimated repetition gain based on channel conditions of the respective signal.

The channel conditions may include a channel quality metric based on strength of line of sight component.

The apparatus may be caused to determine power values for the first signal and the second signal from the obtained signal measurements of the first signal and the second signal.

The apparatus maybe caused to compare a sum of the determined power values and the estimated repetitions gains for the first signal and the second signal, and choose the signal with the largest sum.

The first signal may be associated with a first beam of the user equipment. The second signal may be associated with one of the first beam and a second beam of the user equipment.

The apparatus may be caused to determine an estimated degradation of decoding performance for a downlink channel when received with the beam associated with the signal having the lower determined power value and determine the one of the first signal and the second signal based on the estimated degradation.

The signal measurement may be synchronization signal or reference signal received power.

The signals may be from the same or different cells.

The signals may comprise either synchronisation signal blocks or channel state information reference signals.

The apparatus may be caused to receive further configuration parameters defining a mapping between the number of transmissions of the first message of the random access procedure on resources associated with the plurality of signals and signal measurements of the plurality of signals and determine the number of transmissions of the first message for the first signal and the second signal based on the configured mapping.

In a fourth aspect there is provided a computer readable medium comprising instructions which, when executed by an apparatus, cause the apparatus to perform at least the following, at a user equipment, receiving, from a network node, configuration parameters defining a resources associated with a plurality if signals for transmission of a first message of a random access procedure, obtaining signal measurements for the plurality of signals, determining a number of transmissions of the first message for a first signal and a second signal of the plurality of signals based on the obtained signal measurements, choosing resources associated with one of the first signal and the second signal for transmission of the first message, based at least on the determined number of transmissions of the first message for the respective signals and the obtained signal measurements and performing transmission of the first message of the random access procedure on at least part of the chosen resources.

Choosing resources associated with one of the first signal and the second signal may comprise determining estimated repetition gains from the number of transmissions of the first message determined for the first signal and for the second signal.

The apparatus may be caused to perform determining the estimated repetition gain based on channel conditions of the respective signal.

The channel conditions may include a channel quality metric based on strength of line of sight component.

Choosing resources associated with one of the first signal and the second signal may further comprise determining power values for the first signal and the second signal from the obtained signal measurements of the first signal and the second signal.

Choosing resources associated with one of the first signal and the second signal may further comprise comparing a sum of the determined power values and the estimated repetitions gains for the first signal and the second signal, and choosing the signal with the largest sum.

The first signal may be associated with a first beam of the user equipment. The second signal may be associated with one of the first beam and a second beam of the user equipment.

Choosing resources associated with one of the first signal and the second signal may further comprise determining an estimated degradation of decoding performance for a downlink channel when received with the beam associated with the signal having the lower determined power value and determining the one of the first signal and the second signal based on the estimated degradation.

The signal measurement may be synchronization signal or reference signal received power.

The signals may be from the same or different cells.

The signals may comprise either synchronisation signal blocks or channel state information reference signals.

The apparatus may be caused to perform receiving further configuration parameters defining a mapping between the number of transmissions of the first message of the random access procedure on resources associated with the plurality of signals and signal measurements of the plurality of signals and determining the number of transmissions of the first message for the first signal and the second signal based on the configured mapping.

In a fifth aspect there is provided a non-transitory computer readable medium comprising program instructions for causing an apparatus to perform at least the method according to the second aspect.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example 5GS communication system;
Figure 2 shows a schematic diagram of an example mobile communication device;
Figure 3 shows a schematic diagram of an example control apparatus;
Figure 4 shows a schematic diagram of coverage enhancement levels;
Figure 5 shows a schematic diagram of coverage enhancement levels in FR2;
Figure 6 shows a flowchart of a method according to an example embodiment;
Figure 7 shows a schematic diagram of a scenario in which different SS/PBCH block indexes of Panel1 and Panel2 of a UE receive similar SS-RSRP;
Figure 8 shows a schematic diagram of a scenario in which the sane SS/PBCH block indexes of Panel1 and Panel2 of a UE receive similar SS-RSRP;
Figure 9 shows a flowchart of an algorithm according to an example embodiment.

### Detailed description

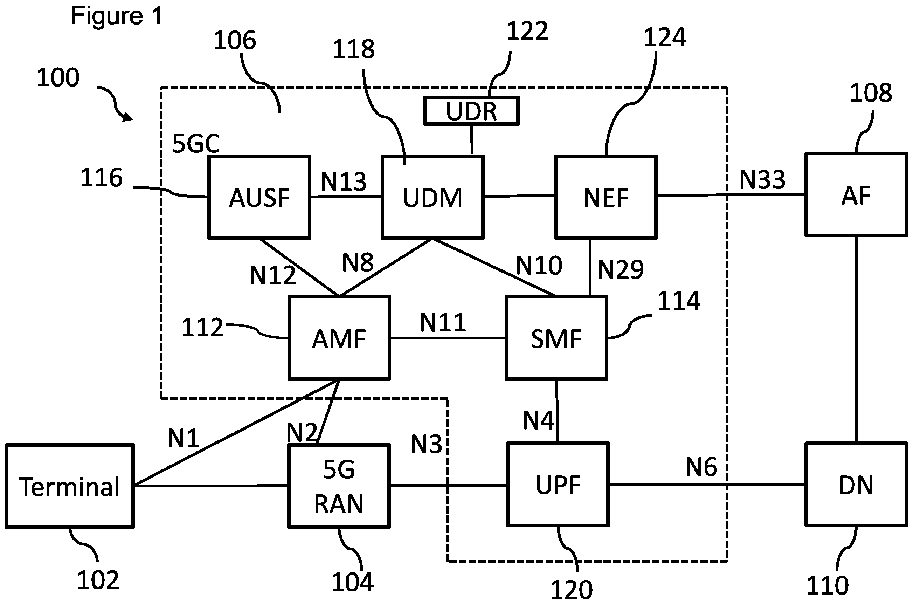

Before explaining in detail the examples, certain principles of a wireless communication system and mobile communication devices are briefly explained with reference to Figures 1 to 3 to assist in understanding the technology underlying the described examples.

An example of a suitable communications system is the 5G or NR concept. Network architecture in NR may be similar to that of LTE-advanced. Base stations of NR systems may be known as next generation Node Bs (gNBs). Changes to the network architecture may depend on the need to support various radio technologies and finer QoS support, and some on-demand requirements for e.g. Quality of Service (QoS) levels to support Quality of Experience (QoE) for a user. Also network aware services and applications, and service and application aware networks may bring changes to the architecture. Those are related to Information Centric Network (ICN) and User-Centric Content Delivery Network (UC-CDN) approaches. NR may use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Figure 1 shows a schematic representation of a 5G system (5GS) 100. The 5GS may comprise a user equipment (UE) 102 (which may also be referred to as a communication device or a terminal), a 5G radio access network (5GRAN) 104, a 5G core network (5GCN) 106, one or more application functions (AF) 108 and one or more data networks (DN) 110.

An example 5G core network (CN) comprises functional entities. The 5GCN 106 may comprise one or more access and mobility management functions (AMF) 112, one or more session management functions (SMF) 114, an authentication server function (AUSF) 116, a unified data management (UDM) 118, one or more user plane functions (UPF) 120, a unified data repository (UDR) 122 and/or a network exposure function (NEF) 124. The UPF is controlled by the SMF (Session Management Function) that receives policies from a PCF (Policy Control Function).

The CN is connected to a UE via the radio access network (RAN). The 5GRAN may comprise one or more gNodeB (GNB) distributed unit functions connected to one or more gNodeB (GNB) centralized unit functions. The RAN may comprise one or more access nodes.

A User Plane Function (UPF) referred to as PDU Session Anchor (PSA) may be responsible for forwarding frames back and forth between the DN and the tunnels established over the 5G towards the UE(s) exchanging traffic with the DN.

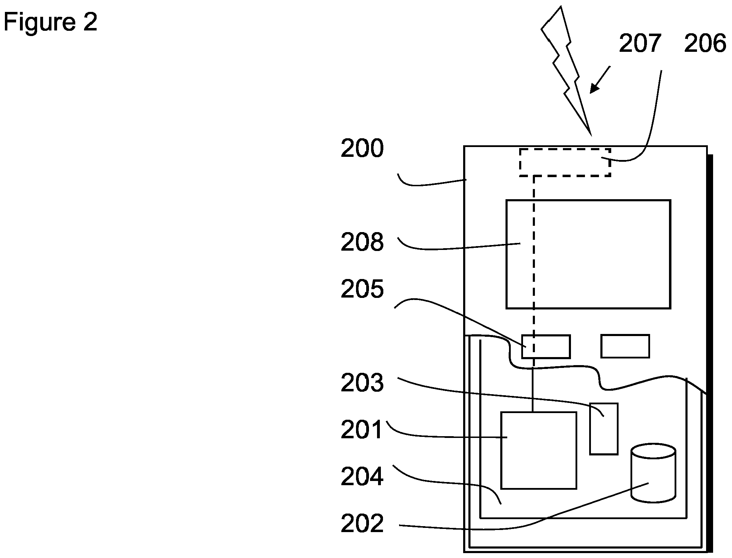

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, voice over IP (VoIP) phones, portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), smart devices, wireless customer-premises equipment (CPE), or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A mobile device may be provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

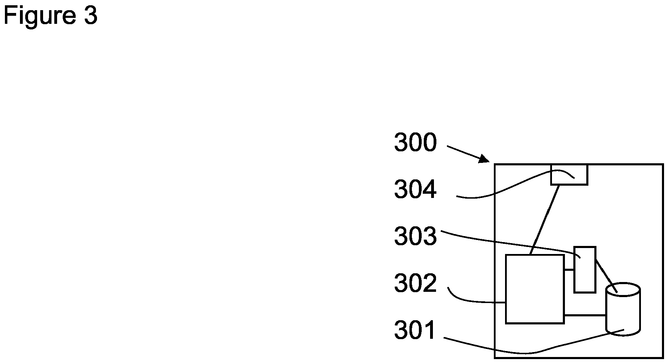

Figure 3 shows an example of a control apparatus 300 for a communication system, for example to be coupled to and/or for controlling a station of an access system, such as a RAN node, e.g. a base station, eNB or gNB, a relay node or a core network node such as an MME or S-GW or P-GW, or a core network function such as AMF/SMF, or a server or host. The method may be implemented in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

Message 1 (Msg1) of a random access procedure repetitions, also referred to as Physical Random Access Channel (PRACH) repetitions, to improve the coverage of the PRACH channel have been studied and standardized in LTE. Repetitions of a channel may allow a receiver (gNB in this example case) to increase the robustness against fast/frequency selective channel variations and collect more energy from the transmitting entity, increasing the receiving SINR and hence the detection or decoding performance. To do this, the receiver uses coherent or non-coherent approaches to detect the transmitted preamble (in Msg1). For cases with a high number of repetitions the non-coherent detectors are shown to provide lower computational complexity.

However, compared to repetitions in connected mode, during PRACH phase in initial access a gNB has no idea of UE specific channel conditions, making it difficult for the network to be able to assign a precise number of repetitions tailored to a specific UE. Different coverage enhancements (CE) levels have been introduced in LTE, each CE level mapped to a different number of repetitions. A UE picks a CE level based on the measured SS-RSRP (RSRP of the SS/PBCH block). The IE RACH-ConfigCommon is used to specify the generic random access parameters including RACH configuration for CE-users.

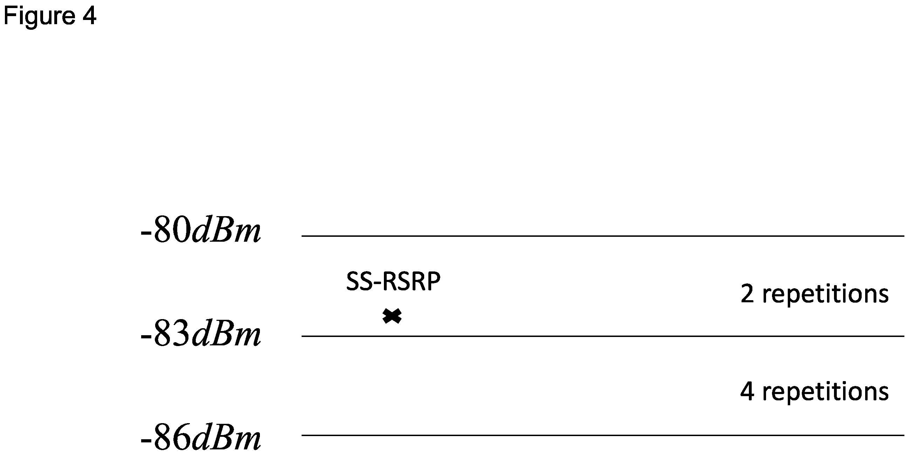

Figure 4 illustrates a representation of the LTE solution, where for example the UE has measured an SS-RSRP of -82 dBm belonging to the first CE level ([-83 -80] dBm). The first CE level corresponds to two repetitions and the second CE level ([-86 -83] dBm) corresponds to four repetitions. In this case, the UE transmits the PRACH with 2 repetitions.

PRACH repetitions will be introduced in Rel-18 NR, to improve the coverage of the PRACH channel. In the following, it is assumed that the same framework of CE levels introduced in LTE is reused in NR for PRACH repetitions.

In NR, multiple SS/PBCH blocks with different indexes are sequentially broadcast from gNB with different spatial filter settings (i.e. different beams). In addition, in Frequency Range 2 (FR2), a UE is equipped with multiple panels and is able to create multiple beams per panel that can receive with more or less power the several SS/PBCH blocks broadcast by the gNB.

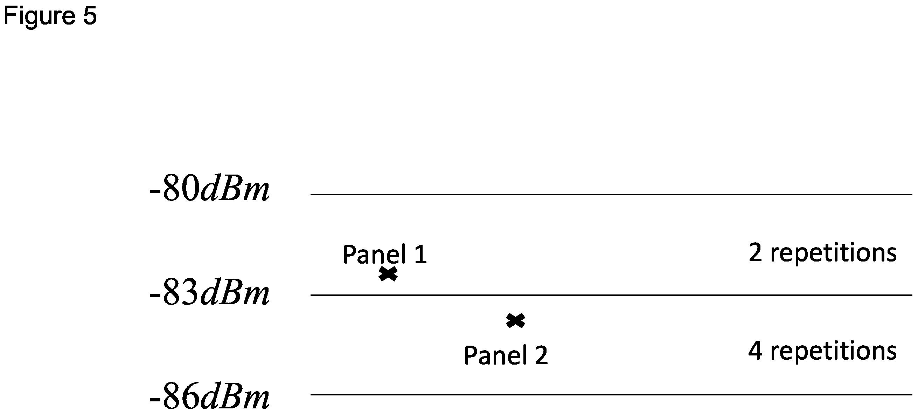

For this reason, a UE may measure a similar RSRP from the same or different SS/PBCH blocks (in FR1 and FR2), on different panels/beams (in FR2), and would select the SS/PBCH block and panel/beam (in FR2) with the highest measured RSRP for optimizing the link budget. For example, if we consider the scenario of Figure 5 where an FR2 UE is measuring an SS-RSRP of -83.5dBm on panel 2 and an SS-RSRP of -82.5dBm on panel 1, this would lead the UE to pick panel 1 and related SS/PBCH block index for subsequent PRACH transmission, since it provides a 1dB gain on the link budget to the gNB.

However, in the context of PRACH repetitions, such a choice of panel and related SS/PBCH block may be sub-optimal since the two panels and/or SS/PBCH blocks indexes belong to two different CE levels. A doubling in the number of repetitions may provide up to 3dB gain. Hence, choosing the panel with the highest RSRP in this scenario with 1dB RSRP difference between the two panels and related SS/PBCH blocks would not be the optimal choice for UL (e.g. PRACH) operation.

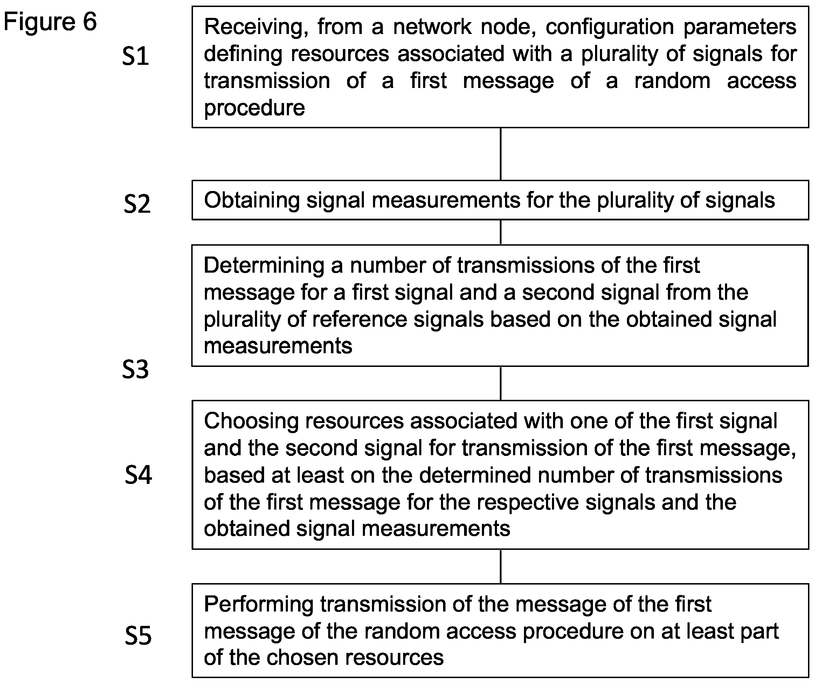

Figure 6 shows a flowchart of a method according to an example embodiment. The method may be performed at a user equipment.

In S1, the method comprises receiving, from a network node, configuration parameters defining resources associated with a plurality of signals for transmission of a first message of a random access procedure.

In S2, the method comprises obtaining signal measurements for the plurality of signals.

In S3, the method comprises determining a number of transmissions of the first message for a first signal and a second signal from the plurality of reference signals based on the obtained signal measurements.

In S4, the method comprises choosing resources associated with one of the first signal and the second signal for transmission of the first message, based at least on the determined number of transmissions of the first message for the respective signals and the obtained signal measurements.

In S5, the method comprises performing transmission of the message of the first message of the random access procedure on the at least part of the chosen resources.

The signals may be those of SS or PBCH blocks. The signals may comprise SSBs or CSI-RS. The resources associated with the plurality of signals may be resources associated with each SS/PBCH index for PRACH transmissions.

The first signal may be associated with a first beam of the user equipment and the second signal may be associated with one of the first beam and a second beam of the user equipment.

The method may comprise receiving further configuration parameters defining a mapping between the number of transmissions of the first message of the random access procedure on resources associated with the plurality of signals and signal measurements of the plurality of signals and determining the number of transmissions of the first message for the first signal and the second signal based on the configured mapping. The further configuration parameters defining a mapping between a number of transmissions of a first message of a random access procedure on resources associated with a plurality of signals and signal measurements of the plurality of signals may comprise CE levels.

Choosing resources associated with one of the first signal and the second signal may comprise estimating repetition gains from the number of transmissions of the first message determined for the first signal and for the second signal.

Choosing resources associated with one of the first signal and the second signal may further comprise determining power values for the first signal and the second signal from the obtained signal measurements of the first signal and the second signal.

Choosing resources associated with one of the first signal and the second signal may further comprise comparing a sum of the determined power values and the estimated repetitions gains for the first signal and the second signal, and choosing the signal with the largest sum.

According to an example, the method provides a procedure at the UE for choosing resources associated with SS/PBCH block index for PRACH transmission and relative panel/beam. In particular, it takes advantage of the observation that a number of PRACH repetitions could provide SNR gain (e.g. based on channel conditions), to enable a UE to perform a choice of the SS/PBCH block and related panel/beam that optimizes the link budget and the probability of successful connection to the network.

The SS/PBCH blocks may be transmitted by the same gNB/cell or from different gNBs/cells. In other words, the signals may be from co-located or non co-located cells or gNBs. This may be relevant in the case, for example, a UE is at cell-edge and receives the SS/PBCH blocks of neighbour cells at similar strength.

The signal measurement may be SS-RSRP. In an example embodiment, UE chooses the SS/PBCH index and related panel/beam based on joint measured RSRP values and estimated repetition gain, Gᵢ, from the corresponding mapped number of repetitions compared to single PRACH transmission. The repetition gain, Gᵢ, may be defined as a signal-to-noise ratio gain on the received signal (e.g. PRACH) when combining repetitions of such signal. A UE would weigh the SS-RSRP for a certain SS/PBCH block and related panel/beam with a possible estimated repetition gain given by the number of PRACH repetitions for that same SS/PBCH block and related panel/beam, and make a choice based on such weighted metric rather than on the received SS-RSRP. In one example, the weighing is a sum operation in dB domain defined by Gᵢ+ RSRP, wherein the SS-RSRP is summed up with an estimated repetition gain Gᵢ (in dB) given by the number of PRACH repetitions, and finally UE chooses the SS/PBCH block and related panel/beam with the largest sum.

The method may comprise determining the estimated repetition gain based on channel conditions of the respective signal. The channel conditions include a channel quality metric based on strength of line of sight component.

For example, a UE may estimate the potential gain achieved by the number of PRACH repetitions per panel/beam based on the channel conditions experienced by the relative SS/PBCH block and CORESET0/SIB1. Channel conditions are available at the UE from the downlink channel before PRACH transmission (SS/PBCH and CORESET0/SIB1).

For more favourable channel conditions (CDL-D-like channel) with one strong cluster a UE may assume a larger gain given by doubling the number of PRACH repetitions compared to less favourable channel conditions (CDL-C-like channel), wherein CDL-C and CDL-D are example channels with 3GPP naming. For example, UE may set the gain equal to 3dB for more favourable channel conditions and down to 2dB for less favourable channel conditions.

Choosing resources associated with one of the first signal and the second signal further comprises means for determining an estimated degradation of decoding performance for a downlink channel when received with the beam associated with the signal having the lower determined power value and determining the one of the first signal and the second signal based on the estimated degradation.

The estimated degradation of decoding performance for a downlink channel may comprise a block error rate (BLER) degradation and may be used by a UE for choosing resources associated with one of the first signal and the second signal alternatively or in addition to the weighing of the SS-RSRP with the estimated repetition gain.

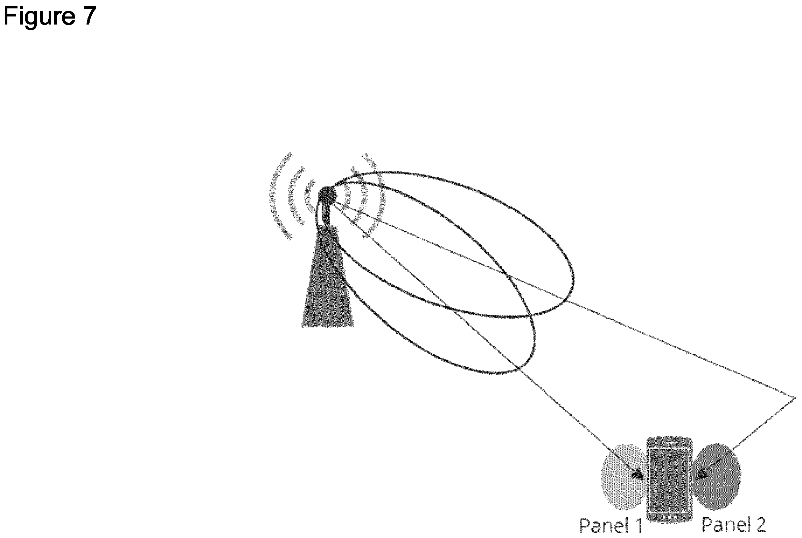

For example, if the SS/PBCH block indexes of different panels/beams (e.g. Panel 2 and Panel 1) are different (as shown in Figure 7), UE may condition the choice of the SS/PBCH block index and related panel/beam on the downlink performance of a hypothetical PDCCH carrying DCI format 1_0 with CRC scrambled by a corresponding RA-RNTI scheduling Message 2 (Msg2).

If the choice of the SS/PBCH block index and related panel/beam based on the weighing of the SS-RSRP with the estimated repetition gain leads a UE to choose the SS/PBCH block index and related panel/beam with lowest SS-RSRP and this in turn brings the error performance (BLER) of the PDCCH reception above a threshold (e.g. 10%), the UE keeps operating with legacy procedure and selects the panel with highest SS-RSRP.

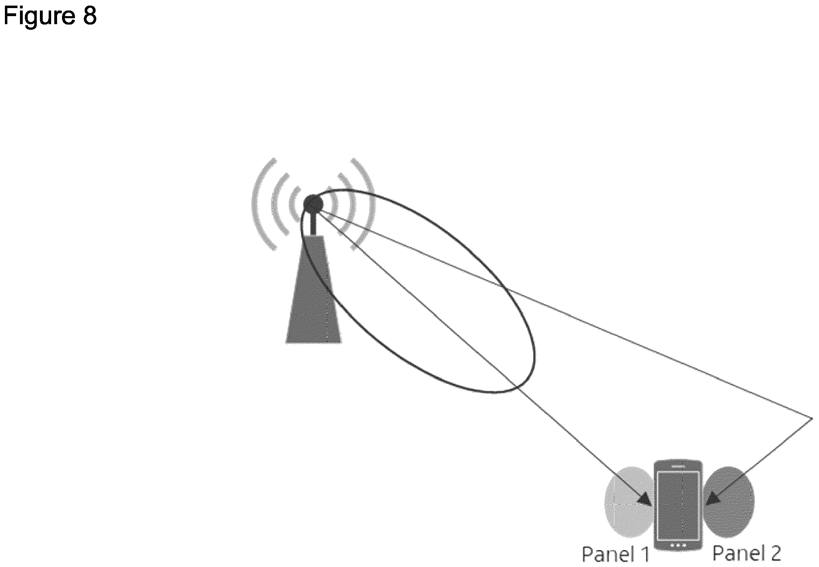

If the SS/PBCH block indexes of different panels/beams (e.g. Panel 2 and Panel 1 in Figure 2) are the same (as in Figure 8), and the weighing of the SS-RSRP with the estimated repetition gain leads a UE to choose the SS/PBCH block index and related panel/beam with lowest SS-RSRP, the UE may decide not to condition the choice of the SS/PBCH block index and related panel/beam on the downlink performance of the hypothetical PDCCH scheduling Msg2, but keeps receiving downlink on the panel with highest SS-RSRP and transmitting uplink on the panel with highest weighing of the SS-RSRP with the estimated repetition gain .

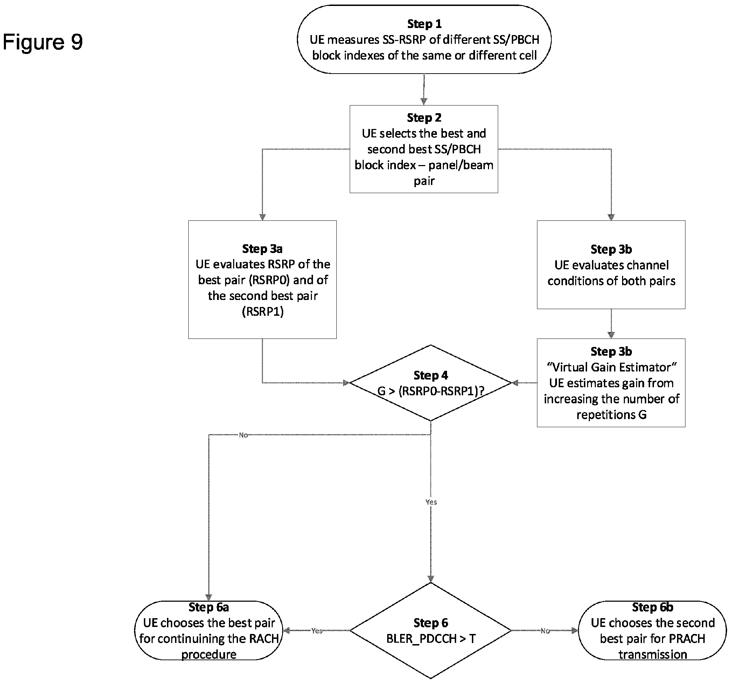

Figure 9 shows a flowchart of a method which may take place at a UE.

At step 1, UE measures the SS-RSRP of different SS/PBCH block indexes (in addition to acquiring time-frequency synchronization) for initial access. The SS/PBCH block indexes may be of the same or different cells.

At step 2, UE picks the first and second best pair of SS/PBCH block index and panel/beam. If UE does not have beamforming capability, a UE would just select the best and second best SS/PBCH block indexes based on measured SS-RSRP.

Step 3 comprises two parallel sub-steps.

At step 3a, UE evaluates SS-RSRP of the best and second best pair, RSRP0 and RSRP1 respectively, and calculates at least their difference delta_RSRP = RSRP0 - RSRP1.

At step 3b, UE determines estimated channel conditions of both pairs of SS/PBCH block index and panel/beam and estimates a gain G₀ and G₁ for each SS/PBCH block index and respective panel/beam from performing msg1 transmission with different number of repetitions based on the estimated channel conditions. For example, a UE could assume a larger gain (e.g. 3dB) for more favourable channel conditions (CDL-D-like channel) with one strong reflection compared to less favourable channel conditions (CDL-C-like channel). This is referred to as Virtual Gain Estimator in the flowchart.

At step 4, the UE performs the weighing as described above with reference to Figure 6. Based on the evaluations of step 3, UE calculates G as |*G*₀ - *G*₁| and compares G with delta_RSRP.

If G < delta_RSRP, UE goes to Step 6a and chooses the best pair for continuing the RACH procedure. If G > delta_RSRP, UE goes to Step 6

At step 6, UE compares the estimated BLER of the PDCCH of the second best pair with an internal threshold T, e.g. 10% BLER. If BLER_PDCCH > T, UE goes to step 6a and chooses the best SS/PBCH block index and panel/beam pair in terms of absolute SS-RSRP value for continuing the RACH procedure. If BLER_PDCCH <= T, UE goes to step 6b and chooses the second best SS/PBCH block index and panel/beam pair for PRACH transmission in terms of absolute SS-RSRP.

An apparatus may comprise means for, at a user equipment, receiving, from a network node, configuration parameters defining resources associated with a plurality of signals for transmission of a first message of a random access procedure, obtaining signal measurements for the plurality of signals, determining a number of transmissions of the first message for a first signal and a second signal from the plurality of signals based on the obtained signal measurements, choosing resources associated with one of the first signal and the second signal for transmission of the first message, based at least on the determined number of transmissions of the first message for the respective signals and the obtained signal measurements and performing transmission of the first message of the random access procedure on at least part of the chosen resources.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the claims.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of the appended claims. Indeed, there is a further embodiment comprising a combination of one or more embodiments with any of the other embodiments previously discussed.

## Claims

1. An apparatus comprising means for, at a user equipment:
receiving, from a network node, configuration parameters defining resources associated with a plurality of signals for transmission of a first message of a random access procedure;
obtaining signal measurements for the plurality of signals;
determining a number of transmissions of the first message for a first signal and a second signal from the plurality of signals based on the obtained signal measurements;
choosing resources associated with one of the first signal and the second signal for transmission of the first message, based at least on the determined number of transmissions of the first message for the respective signals and the obtained signal measurements; and
performing transmission of the first message of the random access procedure on at least part of the chosen resources.

2. An apparatus according to claim 1, wherein means for choosing resources associated with one of the first signal and the second signal comprise means for determining estimated repetition gains from the number of transmissions of the first message determined for the first signal and for the second signal.

3. An apparatus according to claim 2, comprising means for determining the estimated repetition gain based on channel conditions of the respective signal.

4. An apparatus according to claim 3, wherein the channel conditions include a channel quality metric based on strength of line of sight component.

5. An apparatus according to any of claims 2 to 4, wherein means for choosing resources associated with one of the first signal and the second signal further comprise means for determining power values for the first signal and the second signal from the obtained signal measurements of the first signal and the second signal.

6. An apparatus according to claim 5, wherein means for choosing resources associated with one of the first signal and the second signal further comprise means for comparing a sum of the determined power values and the estimated repetitions gains for the first signal and the second signal, and choosing the signal with the largest sum.

7. An apparatus according to any of claims 1 to 6, wherein the first signal is associated with a first beam of the user equipment and the second signal is associated with one of the first beam and a second beam of the user equipment.

8. An apparatus according to claim 7, wherein the means for choosing resources associated with one of the first signal and the second signal further comprises means for determining an estimated degradation of decoding performance for a downlink channel when received with the beam associated with the signal having the lower determined power value; and
means for determining the one of the first signal and the second signal based on the estimated degradation.

9. An apparatus according to any of claims 1 to 8, wherein the signal measurement is synchronization signal or reference signal received power.

10. An apparatus according to any of claims 1 to 9, wherein the plurality of signals are from the same or different cells.

11. An apparatus according to any of claims 1 to 10, wherein the signals comprise either synchronisation signal blocks or channel state information reference signals.

12. An apparatus according to any of claims 1 to 11 comprising means for: receiving further configuration parameters defining a mapping between the number of transmissions of the first message of the random access procedure on resources associated with the plurality of signals and signal measurements of the plurality of signals and determining the number of transmissions of the first message for the first signal and the second signal based on the configured mapping.

13. A method comprising, at a user equipment:
receiving, from a network node, configuration parameters defining resources associated with a plurality of signals for transmission of a first message of a random access procedure ;
obtaining signal measurements for the plurality of signals;
determining a number of transmissions of the first message for a first signal and a second signal from the plurality of signals based on the obtained signal measurements;
choosing resources associated with one of the first signal and the second signal for transmission of the first message, based at least on the determined number of transmissions of the first message for the respective signals and the obtained signal measurements; and
performing transmission of the first message of the random access procedure on at least part of the chosen resources.

14. An apparatus comprising: at least one processor and at least one memory storing instructions that, when executed by the at least one processor, cause the apparatus at least to, at a user equipment:
receive, from a network node, configuration parameters defining resources associated with a plurality of signals for transmission of a first message of a random access procedure;
obtain signal measurements for the plurality of signals;
determine a number of transmissions of the first message for a first signal and a second signal from the plurality of signals based on the obtained signal measurements;
choose resources associated with one of the first signal and the second signal for transmission of the first message, based at least on the determined number of transmissions of the first message for the respective signals and the obtained signal measurements; and
perform transmission of the first message of the random access procedure on at least part of the chosen resources.

15. A computer readable medium comprising instructions which, when executed by an apparatus, cause the apparatus to perform at least the following, at a user equipment:
receiving, from a network node, configuration parameters defining resources associated with a plurality of signals for transmission of a first message of a random access procedure;
obtaining signal measurements for the plurality of signals;
determining a number of transmissions of the first message for a first signal and a second signal from the plurality of signals based on the obtained signal measurements;
choosing resources associated with one of the first signal and the second signal for transmission of the first message, based at least on the determined number of transmissions of the first message for the respective signals and the obtained signal measurements; and
performing transmission of the first message of the random access procedure on at least part of the chosen resources.
